# EUROPEAN PATENT APPLICATION

(11) **EP 1 494 110 A2**
(43) Date of publication of application: **05.01.2005**
(21) Application number: 04012763.1
(22) Date of filing: 28.05.2004
(51) Int. Cl.: G06F 1/32

(54) **Power profiling**

(30) Priority: 30.06.2003 US 610496
(71) Applicant: MICROSOFT CORPORATION, Redmond, Washington 98052-6399 (US)
(72) Inventor: Aasheim, Jered Donald, Bellevue Washington 98008 (US); Yang, Yongqi, Bellevue Washington 98005 (US); Geiger, Avi, Seattle Washington 98122 (US); Midkiff, Jeffrey D., Renton Washington 98058 (US)
(74) Representative: Grünecker, Kinkeldey, Stockmair & Schwanhäusser Anwaltssozietät

(57) **Abstract**

Systems and methods are described for profiling the power consumption of software instructions executing on a processor. A power measurement circuit records power consumption levels of a processor executing various software instructions. A profiling tool tracks and identifies the instructions being executed on the processor and generates an association between the instructions and the power consumed during execution of those instructions. The power profile enables the precise isolation and identification of instructions relative to amounts of power consumed during the execution of those instructions.

## Description

### TECHNICAL FIELD

The present disclosure generally relates to prolonging battery life in mobile devices, and more particularly, to profiling the power consumption of instructions executing on such devices.

### BACKGROUND

Power consumption on portable devices (e.g., notebook computers, sub-notebook computers, cell phones, PDA's, etc.) is of significant importance to users. After all, the extent to which power is available on such devices is the extent to which one might consider them to be portable. The occasional exception to this generalization may be notebook computers that are used as desktop-replacement computers. In this scenario, some users simply expect to move such notebook computers from one power outlet to another, thus reducing the need for dependable portable power. However, the majority of users generally expect to use notebook computers and other portable devices in mobile settings where power outlets are not available.

Components used in such devices can draw significant power. For example, components in a typical notebook can draw 25 watts or more while the notebook runs certain applications. Power consumption is important not only because it determines how long the battery will last, but also because there are limits to how much heat a notebook case can dissipate and still remain comfortable to touch. Heat is less of a problem with PDAs and cell phones, but these devices are expected to have much longer battery life, so power consumption is still a major concern.

Component makers providing components for such portable devices continually strive to reduce the amount of power their components require in order to conserve battery power. For example, a chipmaker for notebook computers may incorporate power saving features such as an ability to automatically reduce the clock speed and the voltage level of a processor when a notebook computer is in a "sleep" mode or when it is switched from AC power to battery power. Other power saving features may include embedding certain software functions in separate hardware chips, shutting down blocks of circuitry when they are not in use (e.g., the radio portion of a chip in a cell phone), turning off hardware components when they have not been used for a certain period of time (e.g., turning off a display screen), and so on.

While these power saving features provide some advantages, they generally fail to address the problem of how to reduce power consumption in a normal "runtime" environment, and/or they have other disadvantages. For example, reducing the clock speed and the voltage level of a processor when a notebook computer is in a sleep mode or running on battery power may adversely affect the performance of certain applications. The use of additional hardware to embed certain software functions requires additional space and cost for the hardware. Shutting down blocks of circuitry and other hardware (e.g., a display screen) that are not in use for a certain period of time only saves power when these components are not being used. Thus, current methods do not address the problem of reducing the normal runtime power consumption of such portable devices, nor do they offer any useful information about how software executing on such devices consumes power.

Furthermore, current mobile application and embedded development tools do not provide a mechanism for profiling power consumption of software executing on such mobile devices. Conventional techniques for monitoring and optimizing power consumption on such devices require labor intensive hardware tracing and software debugging using oscilloscopes and logic analyzers. Such techniques do not help to isolate exact locations in software code where power consumption may be excessive.

Accordingly, the need exists for a way to profile the power consumption of particular software as it is executed in order to help reduce power consumption in embedded, battery powered devices.

### SUMMARY

Power profiling of software execution is described herein.

In accordance with one implementation, instructions executing on a processor are identified. Power consumption data is received from a power measurement circuit and correlated with the identified instructions.

In accordance with another implementation, a power profile is generated. The power profile includes a plurality of power consumption values and a plurality of identified instructions. Each value of power consumption is associated in the power profile with an identified instruction.

### BRIEF DESCRIPTION OF THE DRAWINGS

The same reference numerals are used throughout the drawings to reference like components and features.
Fig. 1 illustrates an exemplary development environment 100 that is suitable for implementing power profiling.
Fig. 2 illustrates an exemplary embodiment of a target device, host computer, and power measurement circuit configured to implement power profiling.
Fig. 3 illustrates an analog to digital converter of a power measurement circuit configured to measure the power consumption of an embedded device.
Fig. 4 illustrates an example of a graphical user interface that might be generated by a power profiler to communicate power consumption information.
Fig. 5 illustrates another exemplary embodiment of a target device, host computer, and power measurement circuit configured to implement power profiling.
Figs. 6 - 8 illustrate block diagrams of exemplary methods for implementing power profiling of software instructions executing on a processor.
Fig. 9 illustrates an exemplary computing environment suitable for implementing a target embedded device and a host computer.

### DETAILED DESCRIPTION

### Overview

The following discussion is directed to systems and methods for profiling the power consumption of software instructions executing on a processor. A power measurement circuit records power consumption levels of a processor executing various software instructions. A profiling tool tracks and identifies the instructions being executed on the processor and generates an association between the instructions and the power consumed during execution of those instructions. The association is a profile represented, for example, as a table or a graph that correlates an amount of power consumed for each instruction executed on the processor. The power profile enables the precise isolation and identification of instructions relative to amounts of power consumed during the execution of those instructions.

Advantages of the disclosed systems and methods include providing a way for software developers to isolate sections of code that consume excessive amounts of power while executing. Code sections that consume excessive amounts of power may be amenable to alternate configurations that perform the same function yet reduce the amount of power consumed during execution. Significant power savings can be realized on mobile embedded and other devices through the identification and reconfiguration of such code sections, especially where those code sections execute on a recurrent basis.

### Exemplary Environment

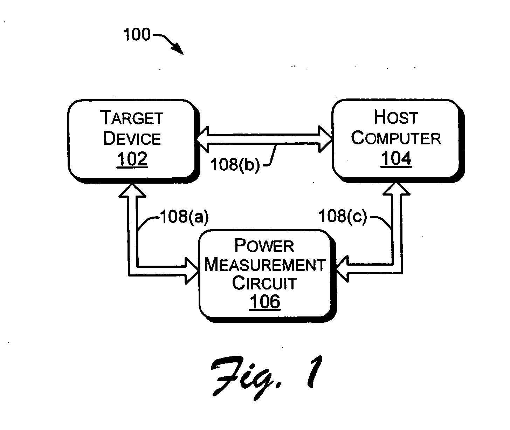

Fig. 1 illustrates an exemplary development environment 100 that is suitable for implementing power profiling. In the exemplary environment 100, a target device 102 is coupled to a host computer 104 and a power measurement circuit 106 via a data communications bus 108. In the exemplary environment 100, the host computer 104 and the power measurement circuit 106 are also coupled via bus 108. Bus 108 is intended to represent any of a variety of general purpose data communications buses including, for example, an I2C (Inter-IC) bus, an SPI (Serial Peripheral Interface) bus, a USB (Universal Serial Bus), and the like. Bus 108 is not a single bus, but is rather made up of several bus instances illustrated as 108(a), 108(b) and 108(c), that interconnect devices 102, 104 and 106.

Target device 102 is intended to represent any of a variety of conventional computing devices. Such devices 102 may include, for example, desktop PCs, notebook or other portable/handheld computers, workstations, servers, mainframe computers, Internet appliances, and so on. However, power profiling may be particularly beneficial in the development of mobile/portable computing devices that are capable of functioning on battery power. Thus, target device 102 is generally discussed throughout this disclosure as being a mobile computing device capable of functioning on battery power.

Such mobile devices 102 typically include embedded, hand-held/mobile devices such as PDA's (e.g., Hewlett-Packard's iPAQ, 3Com's PalmPilot, RIM's Blackberry), cell phones, smartphones, and the like. Such embedded, hand-held/mobile devices generally provide more limited computing capabilities than a typical personal computer. Such capabilities may include, for example, information storage and retrieval capabilities for personal or business use, including keeping schedule calendars and address book information. Such devices usually offer some version of an operating system such as, for example, Windows CE. Various applications are available for such devices that provide limited functionality compared to full-fledged versions available for typical personal computers. Thus, mobile, embedded, target devices 102 may include limited versions of email, phone, SMS (short message service), organizer and Web applications. A target device 102 might also include a laptop or notebook computer. Thus, target device 102 may be implemented as a notebook computer running an open platform operating system, such as the Windows® brand operating systems from Microsoft® and various applications for performing common computing functions, such as email, calendaring, task organization, word processing, Web browsing, and so on. An exemplary computing environment for implementing various embodiments of a target device 102 is described in more detail herein below with reference to Fig. 9.

Power measurement circuit 106 is a custom circuit capable of measuring power consumption on the target device 102. Power measurement circuit 106 enables the measurement of active power consumption in an analog format and the conversion of analog power consumption measurements into a digital format. Power measurement circuit 106 also typically enables the storage of such digitally formatted power consumption information and an ability to communicate this information to a host computer 104 via data communications bus 108(c).

Host computer 104 can be any of a variety of conventional computing devices, including desktop PCs, notebook or portable computers, workstations, servers, mainframe computers, Internet appliances, and so on. Host computer 104 is generally configured to profile the power consumption on target device 102 with respect to software instructions executing on the device 102. Host computer 104 tracks and identifies which software instructions are executing on target device 102 at any given time and receives power consumption information from power measurement circuit 106. Host computer 104 generates a power profile that correlates power consumption on target device 102 with the execution of specific software instructions on the device 102. An exemplary computing environment for implementing a host computer 104 is described in more detail herein below with reference to Fig. 9.

### Exemplary Embodiments

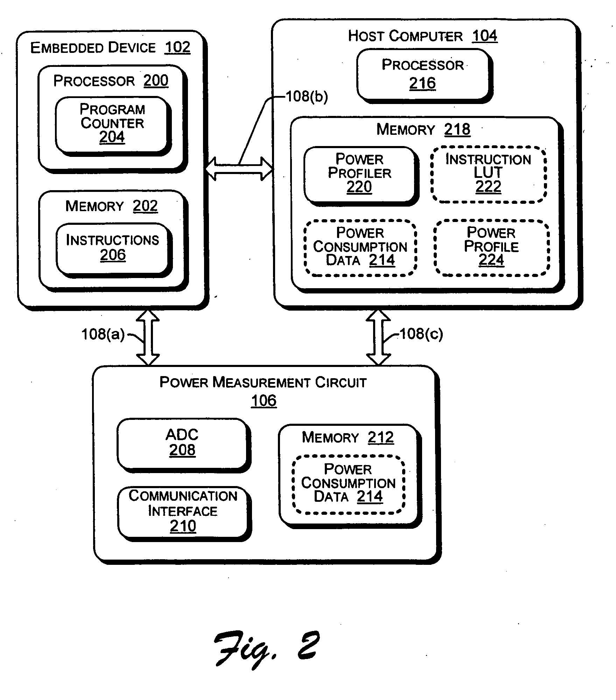

Fig. 2 illustrates an exemplary embodiment of a target device 102, host computer 104, and power measurement circuit 106 configured to implement power profiling. Target device 102 is implemented as an embedded device 102 and includes a processor 200 and a memory 202. The processor 200 includes a program counter 204. A program counter 204 is a register in the processor 200 that contains the address of the next instruction 206 from memory 202 to be executed.I The program counter 204 is automatically incremented after each instruction 206 is fetched in order to point the processor 200 to a subsequent instruction 206. In addition, special instructions may be provided that alter the sequence of execution of instructions 206 by writing a new value to the program counter 204. Such instructions 206 include, for example, JUMP, CALL, and RTS (return from subroutine) instructions. Instructions 206 in memory 202 can include any executable instructions that are part of an operating system, various application programs, device drivers, and so on.

Power measurement circuit 106 typically includes an analog to digital converter (ADC) 208, a communications interface 210 and a memory 212. ADC 208 is preferably a high precision analog to digital converter such as, for example, a National Semiconductor ADC12662. ADC 208 is typically configured to measure active power consumption of a processor 200 executing instructions 206 on embedded device 102. Alternatively, ADC 208 may be configured to measure active power consumption of the entire embedded device 102 during execution of instructions 206 on the device 102. Power consumption is typically measured in either milliamps or milliwatts (mA or mW respectively).

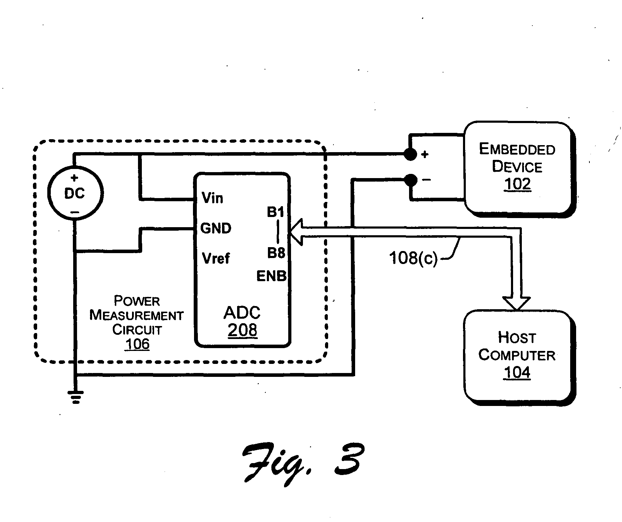

Fig. 3 illustrates an example of how a typical ADC 208 on circuit 106 might be coupled to an embedded device 102 to measure power consumption. It is noted that while Fig. 3 illustrates an ADC 208 configured to measure the power consumption of the embedded device 102, it may also be configured to measure the power consumption of various components of the embedded device 102, such as processor 200. ADC 208 generally converts a continuously variable (i.e., analog) power consumption signal from device 102 into a digital (discrete) form. The analog power consumption signal from device 102 is sampled at a rate that is typically greater than or equal to the rate at which instructions 206 are being executed by processor 200 on embedded device 102. This power sample rate might also be the rate at which a profiler 220 on a host computer 104 samples a program counter 204 on a processor 200 of the embedded device 102, as discussed in greater detail below. The number of digital output states of the ADC 208 is defined by the precision of the ADC 208. For example, a 1amp/12bit ADC 208 can provide 4096 different discrete output values, each representing 0.2 milliamps (i.e., 1amp/4096) of resolution.

Each power consumption value converted to digital form by ADC 208 is typically stored as power consumption data 214 in memory 212 on power measurement circuit 106 prior to being transferred to host computer 104. Communication interface 210 is configured to respond to queries from host computer 104 requesting power consumption data 214 stored in memory 212. Thus, communication interface 210 receives requests from host computer 104 and returns power consumption data 214 from memory 212 to host computer 104 in response to the requests. Communication interface 210 is generally implemented as any one of a variety of serial and/or parallel interfaces capable of communicating over bus 108(c) with host computer 104.

Host computer 104 includes a processor 216 and memory 218, and in general, can be represented by the exemplary computing environment described in more detail herein below with reference to Fig. 9. Memory 218 includes a power profiler 220 module that is configured to execute on processor 216 to track and identify software instructions 206 executing on embedded device 102. In this respect, power profiler 220 generally resembles current available profiler development tools that use statistical methods to determine which software instructions and components (i.e., groups of instructions) are running at any given moment as well as how long software instructions and components execute.

One popular example of a frequently used profiling method is Monte Carlo profiling. In Monte Carlo profiling, a profiler (e.g.; power profiler 220) interrupts the system (e.g., processor 200 on embedded device 102) at a very high rate and inspects which software instruction 206 is currently executing. This inspection is implemented through sampling the program counter 204 of the processor 200 being interrupted. Using the sampled value of the program counter 204, the profiler 220 scans an instruction lookup table 222 to locate a memory address associated with the program counter 204. In general, lookup table 222 is a mapping between memory locations/addresses and compiled code generated when a compiler compiles source code into machine code. From the memory address, the profiler 220 identifies the software instruction that was executing when the processor 200 was interrupted. After a period of time, the number of "hits" for each software instruction or component is tabulated and a software developer is able to better understand which software is utilizing the majority of computation time.

Power profiler 220 is additionally configured to query the power measurement circuit 106 to determine the power consumption level of embedded device 102 at any given moment. Power profiler 220 receives power consumption data 214 from power measurement circuit 106 in response to the queries it sends to power measurement circuit 106. Power profiler 220 is adapted to query the power measurement circuit 106 each time it takes a sample of the program counter 204 as discussed above. Thus, each time the power profiler 220 samples the program counter 204 to identify a software instruction executing on processor 200, it queries the power measurement circuit 106 and receives a value from power consumption data 214 that has been measured during the execution of the software instruction on processor 200. Alternatively, power profiler 220 may query the power measurement circuit 106 at intervals and receive groups of values of power consumption data 214 which it then correlates with identified software instructions executed on processor 200. Thus, power consumption data 214 may be received as one value per query sent in real time from power profiler 220, or it may be received as a group of power consumption values that have been previously stored in memory 212 on power measurement circuit 106.

Power profiler 220 is also configured to correlate the power consumption data 214 received from power measurement circuit 106 with the software instructions 206 executing on processor 200 of embedded device 102. Power profiler 220 generates a power profile 224 that quantifies the power consumed for the precise software instruction executing on processor 200 of embedded device 102. A power profile 224 can be represented in various forms including, for example, a table or a graph that provide pairs of information identifying software instructions with corresponding power consumption values measured during the execution of the identified software instructions.

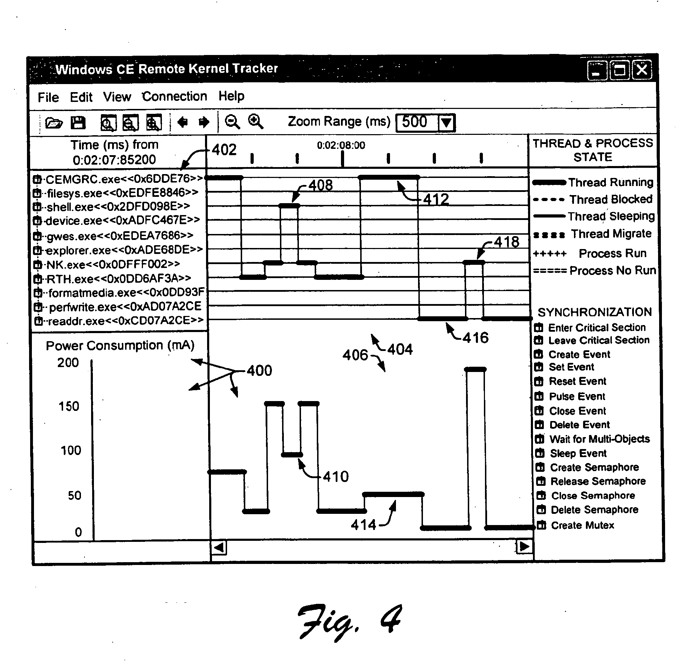

Fig. 4 illustrates an example of a graphical user interface that might be generated by power profiler 224 to communicate information in a power profile 224 to a developer. The power profile 224 illustrated in Fig. 4 is shown in the form of a graph that depicts a correlation between levels of power consumption 400 and various software instructions 402 from various applications executing on an embedded device 102. The thick horizontal lines in the top half 404 of the graph are intended to indicate which software instructions 402 are currently executing. The thick horizontal lines in the bottom half 406 of the graph are intended to indicate the level of power consumed during the execution of the currently executing software instruction as indicated in the top half of the graph. For example, when the instruction, "shell.exe<<0x2DFD098E>>" 408 executes, the power consumption is approximately 90 mA 410, while when instruction the "CEMGRC.exe<<0x6DDE76>>" 412 executes, the power consumption is approximately 50 mA 414.

In general, the power profiling information presented to a developer in a power profile 224 such as that shown in Fig. 4 can help a developer identify "hot spots" in code where there are increases in runtime power consumption on a mobile device 102. For example, in the Fig. 4 profile, when "readdr.exe<<0xCD07A2CE>>" 416 is executing, the power consumption increases dramatically because of a function call into "NK.exe<<0x0DFFF002>>" 418. Consequently, a developer may find it advantageous to eliminate "NK.exe<<0x0DFFF002>>" 418 function call if possible in order to save power.

As developers profile the runtime power consumption of their software modules using power profiles 224 such as that shown in Fig. 4, they should be able to identify certain generic programming constructs and algorithms that are more power-usage friendly than others. For example, a frequently executing algorithm that uses recursion might consume more power than one that uses iteration. Likewise, polling might consume less power than waiting for an interrupt, or, preventing unnecessary context switches may dramatically reduce power, and so on. Furthermore, by using very high-precision profiling data it may be possible to identify specific hardware-dependent CPU instructions that use more power than others.

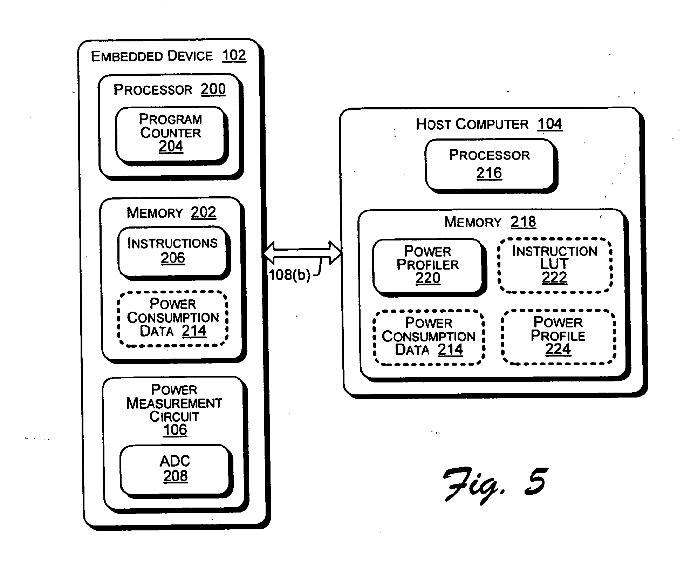

Fig. 5 illustrates another exemplary embodiment of a target device 102, host computer 104, and power measurement circuit 106 configured to implement power profiling. As in the previous embodiment of Fig. 2, target device 102 is implemented as an embedded device 102. In addition, the embedded device 102 of Fig. 5 is generally configured to operate as discussed above. However, in the Fig. 5 embodiment, embedded device 102 includes the power measurement circuit 106. Power measurement circuit 106 functions in a manner similar to that discussed above with respect to the Fig. 2 embodiment. However, because the power measurement circuit 106 is integrated into embedded device 102, in one implementation it may share various components of the embedded device 102 such as memory 202. As an example, Fig. 5 illustrates power consumption data 214 as being stored by power measurement circuit 106 in memory 202 on embedded device 102.

### Exemplary Methods

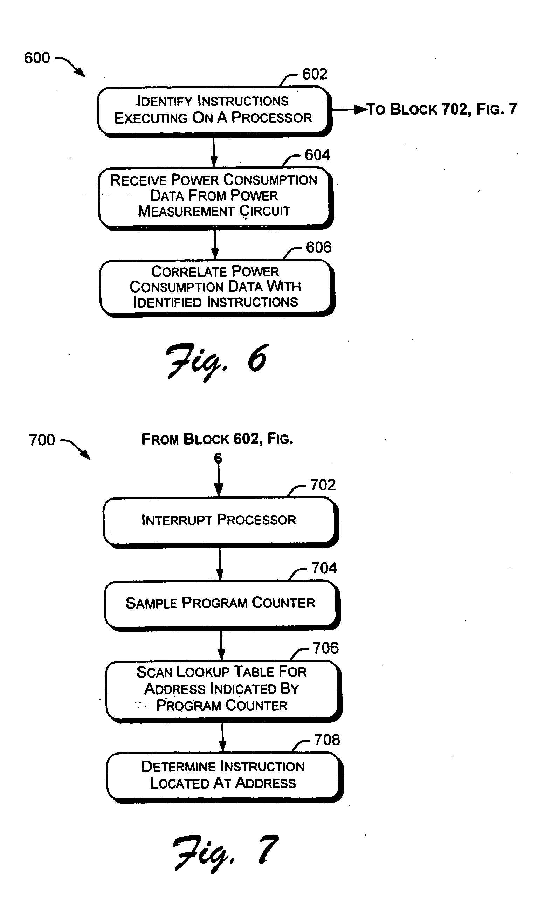

Example methods for implementing power profiling in an environment such as the exemplary development environment 100 of Fig. 1 will now be described with primary reference to the flow diagrams of Figs. 6 - 8. The methods apply generally to the exemplary embodiments discussed above with respect to Figs. 2 - 5. The elements of the described methods may be performed by any appropriate means including, for example, by hardware logic blocks on an ASIC or by the execution of processor-readable instructions defined on a processor-readable medium.

A "processor-readable medium," as used herein, can be any means that can contain, store, communicate, propagate, or transport instructions for use by or execution by a processor. A processor-readable medium can be, without limitation, an electronic, magnetic, optical, electromagnetic, infrared, or semiconductor system, apparatus, device, or propagation medium. More specific examples of a processor-readable medium include, among others, an electrical connection (electronic) having one or more wires, a portable computer diskette (magnetic), a random access memory (RAM) (magnetic), a read-only memory (ROM) (magnetic), an erasable programmable-read-only memory (EPROM or Flash memory), an optical fiber (optical), a rewritable compact disc (CD-RW) (optical), and a portable compact disc read-only memory (CDROM) (optical).

Fig. 6 shows an exemplary method 600 for implementing power profiling of software instructions executing on a processor. The processor is generally a component of an embedded device 102 that is capable of operating on battery power. At block 602, instructions executing on a processor are identified. The identification process is generally discussed below with respect to method 700, which is an extension of method 600.

At block 604 of method 600, power consumption data is received from a power measurement circuit 106. The power measurement circuit 106 is typically part of a software development board or it may be resident on the embedded device 102 itself. The power measurement circuit 106 is typically configured to measure the power consumption of the processing circuitry being implemented to execute various software instructions on the embedded device 102, but it can also be configured to measure power consumption of the entire embedded device 102. A host computer 104 running a power profiler 220 typically receives the power consumption data upon querying the power measurement circuit. However, the host computer 104 might receive power consumption data from the power measurement circuit automatically at some fixed interval.

At block 606, the power consumption data is correlated with the identified instructions. The power profiler 220 executing on the host computer 104 associates each instruction that executes on the embedded device 102 with a measured amount of power (i.e., measure by the power measurement circuit 106) being consumed by the processing circuitry of the embedded device 102 during the execution of each identified instruction. The power profiler 220 generates a power profile that tracks the power being consumed on the embedded device 102 due to the execution of the software instructions. Therefore, the power profile typically includes numerous power consumption values each associated with an identified software instruction that has executed on the embedded device 102. The power profile can be implemented in various forms, including for example, a table having pairs of data that match power consumption values with identified software instructions, or a graph that visually correlates power consumption values with identified software instructions.

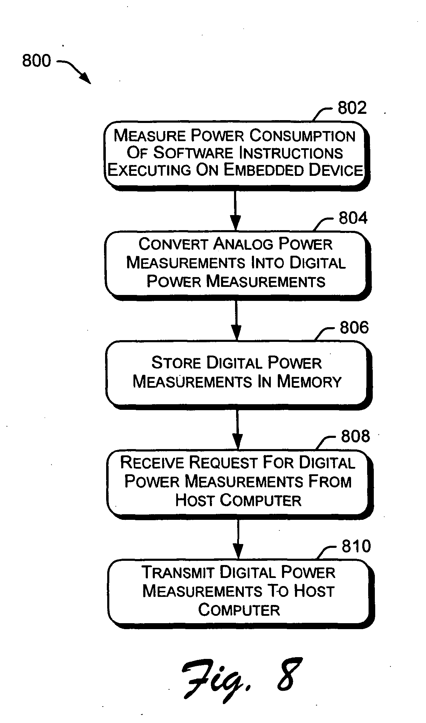

Fig. 7 shows an exemplary method 700 for implementing power profiling of software instructions that is an extension of method 600. Method 700 extends from block 602 of method 600, and generally describes the identification of software instructions executing on a processor. The processor is generally a component of an embedded device 102 that is capable of operating on battery power. At block 702 of method 700, the processor is interrupted. Typically, the processor is executing software instructions in a runtime environment when it is interrupted. The interrupt comes from a host computer 104 executing a power profiler 220.

At block 704, the program counter on the processor is sampled. The program counter is a register in the processor that contains the address of the next software instruction from memory to be executed. In general, it is the value of the program counter that permits the power profiler 220 executing on the host computer 104 to identify which instruction is executing when the processor is interrupted. At block 706, a lookup table is scanned to determine the address in memory indicated by the program counter. The lookup table is a table generated during a previous compilation of the software instructions that are stored on the embedded device. The host computer 104 is typically the computer on which the embedded device 102 software is compiled. Therefore, the lookup table is resident on the host computer 104 and permits the identification of the exact instruction executing on the embedded device 102 when the processor on the embedded device 102 is interrupted and its program counter is sampled.

At block 708, the software instruction is identified which resides at the memory address determined from the program counter. The software instruction might be an instruction from any number of routines or applications running on the embedded device 102.

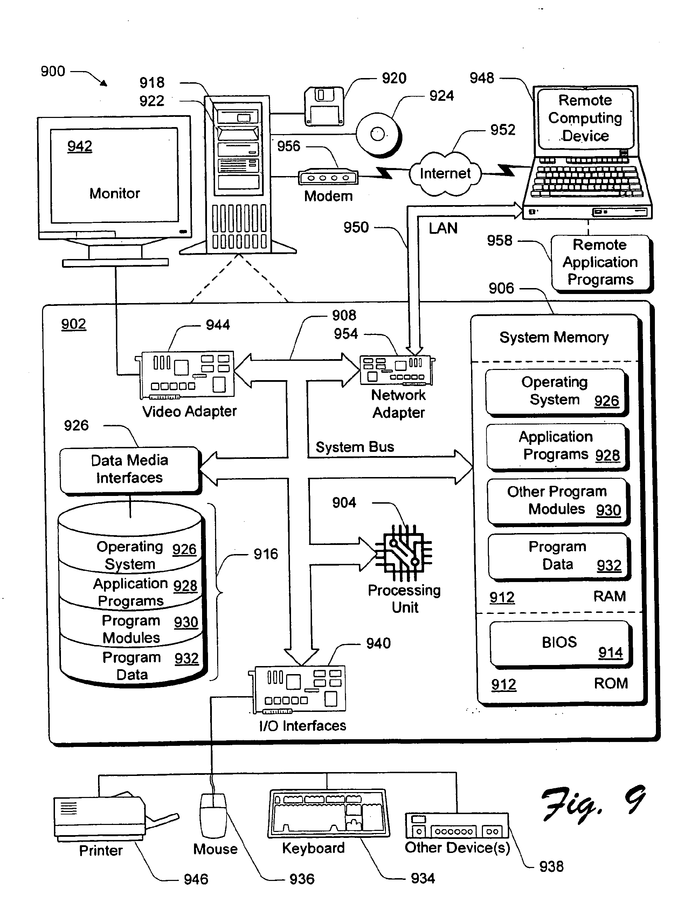

Fig. 8 shows another exemplary method 800 for implementing power profiling of software instructions executing on a processor of an embedded device. At block 802, the power consumption of software instructions executing on an embedded device is measured. A power measurement circuit 106 is typically configured to measure the power consumption of a processor executing the software instructions. However, the power measurement circuit 106 may also be configured to measure power consumption of the entire embedded device 102 during execution of the software instructions by the processor on the embedded device. The power measurement circuit may be integrated into the embedded device, or it may be a part of a software development test board.

At block 804, analog power consumption measurements from the embedded device 102 are converted into digital measurements. The analog to digital conversion is typically implemented by a high precision analog to digital converter (ADC) 208 such as a National Semiconductor ADC12662. At block 806, the digital power measurements are stored in a memory on the power measurement circuit 106. At block 808, the power measurement circuit 106 receives a request from a host computer 104 to transmit power consumption data. Requests may be received as frequently as the execution of each instruction on processor 200 of embedded device 102. Requests may also be received at intervals. At block 810, the power measurement circuit 106 responds to the request(s) by transmitting digital power consumption measurements to the host computer 104. The power consumption data transferred may be transmitted one measurement at a time, or in groups of measurements. The transmissions can depend on the nature of the request from host computer 104.

While one or more methods have been disclosed by means of flow diagrams and text associated with the blocks of the flow diagrams, it is to be understood that the blocks do not necessarily have to be performed in the order in which they were presented, and that an alternative order may result in similar advantages. Furthermore, the methods are not exclusive and can be performed alone or in combination with one another.

### Exemplary Computer

Fig. 9 illustrates an exemplary computing environment suitable for implementing various embodiments of a target device 102 and a host computer 104. Although one specific configuration is shown, a target device 102 and a host computer 104 may be implemented in other computing configurations. For example, the exemplary computing environment of Fig. 9 is generally a more developed computing environment than might typically be employed for specific implementations of a target device 102.

The computing environment 900 includes a general-purpose computing system in the form of a computer 902. The components of computer 902 can include, but are not limited to, one or more processors or processing units 904, a system memory 906, and a system bus 908 that couples various system components including the processor 904 to the system memory 906.

The system bus 908 represents one or more of any of several types of bus structures, including a memory bus or memory controller, a peripheral bus, an accelerated graphics port, and a processor or local bus using any of a variety of bus architectures. An example of a system bus 908 would be a Peripheral Component Interconnects (PCI) bus, also known as a Mezzanine bus.

Computer 902 typically includes a variety of computer readable media. Such media can be any available media that is accessible by computer 902 and includes both volatile and non-volatile media, removable and non-removable media. The system memory 906 includes computer readable media in the form of volatile memory, such as random access memory (RAM) 910, and/or non-volatile memory, such as read only memory (ROM) 912. A basic input/output system (BIOS) 914, containing the basic routines that help to transfer information between elements within computer 902, such as during start-up, is stored in ROM 912. RAM 910 typically contains data and/or program modules that are immediately accessible to and/or presently operated on by the processing unit 904.

Computer 902 can also include other removable/non-removable, volatile/non-volatile computer storage media. By way of example, Fig. 9 illustrates a hard disk drive 916 for reading from and writing to a non-removable, non-volatile magnetic media (not shown), a magnetic disk drive 918 for reading from and writing to a removable, non-volatile magnetic disk 920 (e.g., a "floppy disk"), and an optical disk drive 922 for reading from and/or writing to a removable, non-volatile optical disk 924 such as a CD-ROM, DVD-ROM, or other optical media. The hard disk drive 916, magnetic disk drive 918, and optical disk drive 922 are each connected to the system bus 908 by one or more data media interfaces 926. Alternatively, the hard disk drive 916, magnetic disk drive 918, and optical disk drive 922 can be connected to the system bus 908 by a SCSI interface (not shown).

The disk drives and their associated computer-readable media provide non-volatile storage of computer readable instructions, data structures, program modules, and other data for computer 902. Although the example illustrates a hard disk 916, a removable magnetic disk 920, and a removable optical disk 924, it is to be appreciated that other types of computer readable media which can store data that is accessible by a computer, such as magnetic cassettes or other magnetic storage devices, flash memory cards, CD-ROM, digital versatile disks (DVD) or other optical storage, random access memories (RAM), read only memories (ROM), electrically erasable programmable read-only memory (EEPROM), and the like, can also be utilized to implement the exemplary computing system and environment.

Any number of program modules can be stored on the hard disk 916, magnetic disk 920, optical disk 924, ROM 912, and/or RAM 910, including by way of example, an operating system 926, one or more application programs 928, other program modules 930, and program data 932. Each of such operating system 926, one or more application programs 928, other program modules 930, and program data 932 (or some combination thereof) may include an embodiment of a caching scheme for user network access information.

Computer 902 can include a variety of computer/processor readable media identified as communication media. Communication media typically embodies computer readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared, and other wireless media. Combinations of any of the above are also included within the scope of computer readable media.

A user can enter commands and information into computer system 902 via input devices such as a keyboard 934 and a pointing device 936 (e.g., a "mouse"). Other input devices 938 (not shown specifically) may include a microphone, joystick, game pad, satellite dish, serial port, scanner, and/or the like. These and other input devices are connected to the processing unit 904 via input/output interfaces 940 that are coupled to the system bus 908, but may be connected by other interface and bus structures, such as a parallel port, game port, or a universal serial bus (USB).

A monitor 942 or other type of display device can also be connected to the system bus 908 via an interface, such as a video adapter 944. In addition to the monitor 942, other output peripheral devices can include components such as speakers (not shown) and a printer 946 which can be connected to computer 902 via the input/output interfaces 940.

Computer 902 can operate in a networked environment using logical connections to one or more remote computers, such as a remote computing device 948. By way of example, the remote computing device 948 can be a personal computer, portable computer, a server, a router, a network computer, a peer device or other common network node, and the like. The remote computing device 948 is illustrated as a portable computer that can include many or all of the elements and features described herein relative to computer system 902.

Logical connections between computer 902 and the remote computer 948 are depicted as a local area network (LAN) 950 and a general wide area network (WAN) 952. Such networking environments are commonplace in offices, enterprise-wide computer networks, intranets, and the Internet. When implemented in a LAN networking environment, the computer 902 is connected to a local network 950 via a network interface or adapter 954. When implemented in a WAN networking environment, the computer 902 typically includes a modem 956 or other means for establishing communications over the wide network 952. The modem 956, which can be internal or external to computer 902, can be connected to the system bus 908 via the input/output interfaces 940 or other appropriate mechanisms. It is to be appreciated that the illustrated network connections are exemplary and that other means of establishing communication link(s) between the computers 902 and 948 can be employed.

In a networked environment, such as that illustrated with computing environment 900, program modules depicted relative to the computer 902, or portions thereof, may be stored in a remote memory storage device. By way of example, remote application programs 958 reside on a memory device of remote computer 948. For purposes of illustration, application programs and other executable program components, such as the operating system, are illustrated herein as discrete blocks, although it is recognized that such programs and components reside at various times in different storage components of the computer system 902, and are executed by the data processor(s) of the computer.

### Conclusion

Although the invention has been described in language specific to structural features and/or methodological acts, it is to be understood that the invention defined in the appended claims is not necessarily limited to the specific features or acts described. Rather, the specific features and acts are disclosed as exemplary forms of implementing the claimed invention.

## Claims

1. A processor-readable medium comprising processor-executable instructions configured for:
identifying instructions executing on a processor;
receiving power consumption data from a power measurement circuit; and
correlating the power consumption data with the identified instructions.

2. A processor-readable medium as recited in claim 1, wherein the identifying comprises:
interrupting the processor;
sampling a program counter of the processor;
scanning a lookup table to find an address indicated by the program counter; and
determining an instruction located at the address.

3. A processor-readable medium as recited in claim 1, wherein the receiving comprises:
querying the power measurement circuit; and
receiving digital power readings from the power measurement circuit based on the querying.

4. A processor-readable medium as recited in claim 1, wherein the receiving comprises receiving digital power readings from the power measurement circuit at preset time intervals.

5. A processor-readable medium as recited in claim 1, wherein the correlating comprises associating with an identified instruction, a measured amount of power consumed during execution of the identified instruction on the processor.

6. A processor-readable medium as recited in claim 1, wherein the correlating comprises generating a power profile that includes a plurality of power consumption values and a plurality of identified instructions, wherein each power consumption value is associated with an identified instruction in the power profile.

7. A processor-readable medium as recited in claim 6, wherein the power profile is selected from the group comprising:
a table having pairs of data, each pair of data comprising a power consumption value and an identified instruction; and
a graph correlating power consumption values with identified instructions.

8. A processor-readable medium as recited in claim 1, wherein the power consumption data comprises power consumption values measured during execution of the instructions on the processor.

9. A processor-readable medium as recited in claim 1, wherein the processor is a component of a device selected from the group comprising:
an embedded mobile PDA (personal digital assistant) computing device operable by battery power;
a cell phone;
a smart phone;
a notebook computer;
a desktop PC (personal computer);
a workstation;
a server;
a mainframe computer; and
an Internet appliance.

10. A processor-readable medium comprising processor-executable instructions configured for associating a software instruction with an amount of power consumed by executing the software instruction.

11. A processor-readable medium as recited in claim 10, wherein the associating comprises generating a power profile that matches software instructions executing on an embedded device with corresponding power consumption values measured during execution of the software instructions.

12. A processor-readable medium comprising processor-executable instructions configured for:
measuring power consumption of software instructions executing on a target computing device;
converting analog power measurements into digital power measurements; and
transmitting the digital power measurements to a host computer.

13. A processor-readable medium as recited in claim 12, comprising further processor-executable instructions configured for storing the digital power measurements in a memory after the converting.

14. A processor-readable medium as recited in claim 12, wherein the transmitting comprises:
receiving a request for the digital power measurements from the host computer; and
transmitting the digital power measurements to the host computer based on the request.

15. A processor-readable medium as recited in claim 12, wherein the transmitting comprises transmitting the digital power measurements to the host computer at preset time intervals.

16. A processor-readable medium as recited in claim 12, wherein the target computing device is selected from a group comprising:
an embedded mobile PDA (personal digital assistant);
a cell phone;
a smart phone;
a notebook computer;
a desktop PC (personal computer);
a workstation;
a server;
a mainframe computer; and
an Internet appliance.

17. A method comprising generating a power profile that associates a software instruction with an amount of power consumed during execution of the software instruction.

18. A method as recited in claim 17, wherein the execution of the software instruction is performed by a processor on a target computing device and the amount of power consumed is an amount of power consumed by the processor.

19. A method as recited in claim 17, wherein the generating comprises:
identifying the software instruction executing on a processor;
receiving power consumption data from a power measurement circuit; and
correlating the power consumption data with the identified software instruction.

20. A computer comprising a power profiler configured to identify software instructions executing on a processor, receive power consumption data, and correlate the power consumption data with the software instructions such that each software instruction is associated with a power consumption value indicating an amount of power consumed during the executing of the software instruction.

21. A computer as recited in claim 20, further comprising a lookup table, the power profiler further configured to monitor a program counter on the processor and to identify the software instructions through the lookup table based on the program counter.

22. A computer as recited in claim 20, further comprising a power profile having a plurality of power consumption values each paired with a corresponding software instruction to indicate an amount of power consumed during execution of the corresponding software instruction.

23. A computer comprising a power profiler configured to generate a power profile that correlates software instructions with power consumed during execution of the software instructions.

24. A computer comprising:
means for identifying instructions executing on a processor;
means for receiving power consumption data from a power measurement circuit; and
means for generating a power profile that correlates the power consumption data with the identified instructions.

25. A computer as recited in claim 24, wherein the means for identifying instructions comprises:
means for interrupting the processor;
means for sampling a program counter of the processor; and
means for determining an instruction based on the program counter.

26. A computer as recited in claim 24, wherein the means for receiving comprises:
means for querying the power measurement circuit; and
means for receiving digital power readings from the power measurement circuit based on the querying.

27. A power measurement circuit comprising:
means for measuring power consumption of software instructions executing on an embedded device;
means for converting analog power measurements into digital power measurements; and
means for transmitting the digital power measurements to a host computer in response to a query from the host computer.

28. A power measurement circuit as recited in claim 27, further comprising means for storing the digital power measurements.

29. A computer comprising:
a processor;
instructions stored in a memory and executable on the processor; and
a power measurement circuit configured to measure power consumed by the processor during execution of each instruction.

30. A computer as recited in claim 29, further comprising an analog to digital converter integrated as part of the power measurement circuit and configured to convert analog power signals to digital power consumption data.

31. The computer of claim 29 implemented as a device selected from the group comprising:
an embedded mobile PDA (personal digital assistant);
a cell phone;
a smart phone;
a notebook computer;
a desktop PC (personal computer);
a workstation;
a server;
a mainframe computer; and
an Internet appliance.

32. A system comprising:
a power profiler configured to correlate an identified software instruction with an amount of power consumed during execution of the identified software instruction;
a lookup table having information for identifying the identified software instruction; and
a power profile generated by the power profiler and having power consumption values and identified software instructions, each power consumption value paired with a corresponding identified software instruction.

33. A system as recited in claim 32, further comprising:
a power measurement circuit configured to measure the amount of power consumed during execution of the identified software instruction; and
an analog to digital converter configured as part of the power measurement circuit to convert analog power consumption measurements into digital power consumption data.

34. A system as recited in claim 33, wherein the power measurement circuit is a component of a target computing device on which the identified software instruction is executed.
